# EUROPEAN PATENT APPLICATION

(11) **EP 1 494 115 A2**
(43) Date of publication of application: **05.01.2005**
(21) Application number: 04253969.2
(22) Date of filing: 01.07.2004
(51) Int. Cl.: G06F 3/12

(54) **Method of printing an electronic document**

(30) Priority: 02.07.2003 KR 2003044538
(71) Applicant: Samsung Electronics Co., Ltd., Suwon-si Gyeonggi-do 442-742 (KR)
(72) Inventor: YANG, Seung-sik, Yong-si, Gyeonggi-do (KR)
(74) Representative: Geary, Stuart Lloyd

(57) **Abstract**

This invention is related to a printing method and apparatus for recovering an error and a computer-readable recording medium for storing a computer program. The printing method includes storing intermediate data corresponding to a document to be printed (10), converting the intermediate data into printing data (12), determining whether an error has occurred while the intermediate data is converted into the printing data (14), and when determined that an error has occurred, converting the intermediate data into image type data (18) and converting the image type data into the printing data (20). Here, the document is printed using the printing data.

## Description

The present invention relates to a method of printing an electronic document, the method comprising storing document data in a device independent metafile and converting said metafile to device specific print data, and to a printing apparatus comprising control means, storage means and a printer driver, the control means being operable to control the printer driver to convert a device independent metafile, read from the storage means, into print data.

When a document is prepared using an application program or the like in a host using Microsoft WINDOWS, for example, as an operating system, document data corresponding to the document is converted into printing data by a printer driver of the host, before being transmitted to the printer. When the document data is converted into the printing data, an error such as a general protection fault (GPF) may occur. When a GPF occurs, the document data cannot be converted into the printing data. Moreover, when the cause of an error exists in the printer driver, another type of printer driver must be used to print the document data.

Consequently, since conventional printing methods use a different type of printer driver from an existing printer driver, recovering an error occurring during data conversion is somewhat inconvenient, or document data causing the error cannot be printed.

A method of printing an electronic document, according to the present invention, is characterised by determining whether said metafile has been successfully converted and, in the event that it has not, converting said metafile to non device specific image data and converting said image data to device specific print data and outputting said print data. The image data may be vector image data or a bitmap format. Preferably, the image data is a bitmap format.

A printing apparatus, according to the present invention, is characterised in that the control means is configured to determine whether an error has occurred during the conversion and, in the event that it has, to control the printer driver to convert the device independent metafile read from the storage means into image data and subsequently to convert said image data into print data. The image data may be vector image data or a bitmap format. Preferably, the image data is a bitmap format.

Embodiments of the present invention will now be described, by way of example, with reference to the accompanying drawings, in which:
Figure 1 is a flowchart showing an example of a printing method for recovering an error according to the present invention;
Figure 2 is a block diagram of an example of a printing apparatus for recovering an error according to the present invention; and
Figure 3 is a block diagram of an example of the control unit shown in Figure 2.

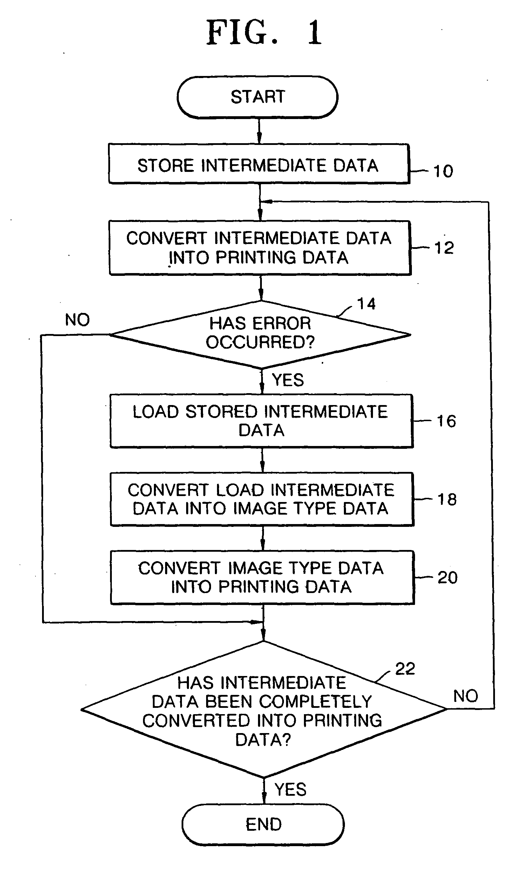

Referring to Figure 1, the printing method includes converting intermediate data into printing data (10 and 12) and, when an error occurs, converting the intermediate data into image type data and converting the image type data into printing data (14 to 22).

Referring to Figure 1, intermediate data corresponding to a document to be printed is stored in operation 10. When Microsoft WINDOWS, for example, is used as an operating system of a host (not shown) in which the document to be printed is generated using an application program, the intermediate data denotes graphic device interface (GDI) function calls included in an enhanced meta file (EMF).

After operation 10, the intermediate data is converted into printing data in operation 12. The printing data may be described in a printer description language (PDL). The PDL is converted into bitmap data suitable for printing by a printer (not shown).

In operation 14, it is determined whether an error has occurred while the intermediate data is converted into the printing data. Usually, an error occurs due to a logical problem, which may occur when intermediate data is converted into printing data, or due to a handling problem of a memory (not shown) used when intermediate data is converted into printing data. A general protection fault (GPF) is an example of such an error.

When it is determined that an error has occurred, the intermediate data is converted into image type data and the image type data is converted into printing data in operations 16 to 20.

For example, when it is determined that an error has occurred, the stored intermediate data is loaded in operation 16. Thereafter, the loaded intermediate data is converted into image type data in operation 18. After operation 18, the image type data is converted into printing data in operation 20 and a document is printed using the printing data generated in operation 12 or 20.

Alternatively, when it is determined that an error has not occurred in operation 14 or after operation 20, it is determined whether the intermediate data has been completely converted into the printing data in operation 22. In other words, it is determined whether all GDI functions included in a single stored EMF have been completely converted into the printing data in operation 22. When it is determined that the intermediate data has not been completely converted into the printing data, the method goes back to operation 12. In other words, when it is determined that all of the GDI functions included in the EMF have not been converted into the printing data, the method goes back to operation 12 in order to convert a GDI function or GDI functions, i.e. intermediate data, that have not been converted into the printing data into the printing data. However, when it is determined that the intermediate data has been completely converted into the printing data, the method ends.

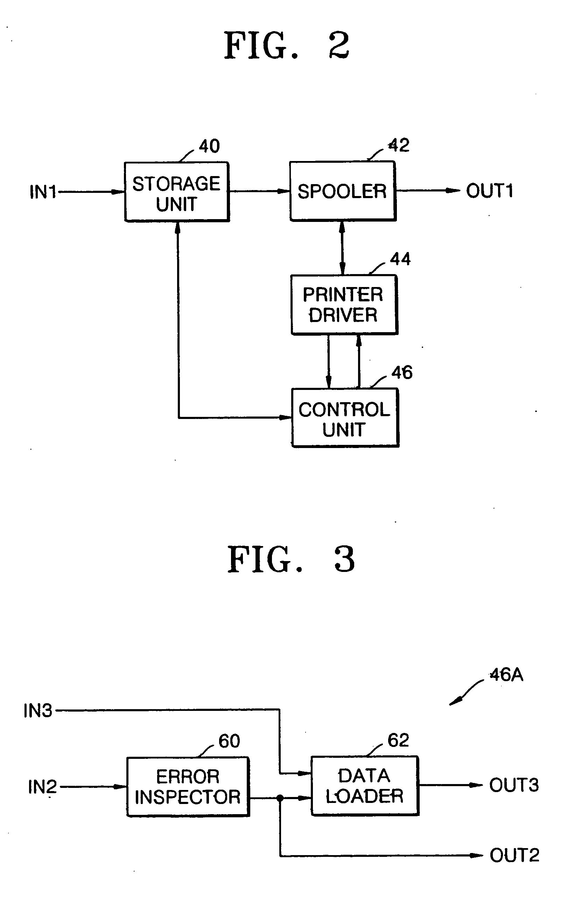

The structure and operation of a printing apparatus for recovering an error according to the present invention will now be described with reference to Figure 2.

Referring to Figure 2, the printing apparatus comprises a storage unit 40, a spooler 42, a printer driver 44 and a control unit 46. The printing apparatus performs the printing method shown in Figure 1.

To perform operation 10, the storage unit 40 shown in Figure 2 receives intermediate data corresponding to a document to be printed through an input terminal IN1 and stores the intermediate data. Then, the storage unit 40 reads the stored intermediate data in response to a request from the control unit 46 and outputs the read intermediate data to the control unit 46.

To perform operation 12, the printer driver 44 converts the intermediate data into printing data and outputs the printing data to the spooler 42. The spooler 42 outputs the printing data to a printer (not shown) or the like through an output terminal OUT1. Here, the spooler 42 is loaded with the intermediate data from the storage unit 40 and outputs the loaded intermediate data to the printer driver 44.

To perform operation 14, the control unit 46 determines whether an error has occurred while the intermediate data is converted into the printing data in the printer driver 44 and outputs the result of the determination as a control signal to the printer driver 44.

To perform operation 16, the control unit 46 is loaded with the intermediate data from the storage unit 40 in response to the control signal generated in operation 14 and outputs the loaded intermediate data to the printer driver 44. For example, when the control unit 46 recognizes that an error has occurred, the control unit 46 loads the intermediate data, which is being converted by the printer driver 44, from the storage unit 40 at the instant in time when the error occurred.

Referring to Figure 3, the control unit 46A includes an error detector (or inspector) 60 and a data loader 62.

To perform operation 14, the error detector 60 determines whether an error has occurred while the intermediate data is converted into the printing data, and outputs the result of the determination as a control signal to the data loader 62 and to the printer driver 44 through an output terminal OUT2. Here, the printer driver 44 can output an error signal reporting an error occurrence to the error detector 60 when an error occurs while it is converting the intermediate data into the printing data.
In this situation, the error detector 60 determines whether the error signal is received from the printer driver 44 through an input terminal IN2 and outputs the result of the determination as a control signal.

To perform operation 16, the data loader 62 is loaded with the intermediate data from the storage unit 40 through an input terminal IN3 and outputs the loaded intermediate data to the printer driver 44 through an output terminal OUT3, in response to the control signal from the error detector 60. For example, when an error occurrence is recognized using the control signal, the data loader 62 receives the intermediate data from the storage unit 40 and outputs the intermediate data to the printer driver 44 through the output terminal OUT3.

To perform operation 18, the printer driver 44 converts the intermediate data received from the control unit 46 into image type data, in response to the control signal received from the control unit 46. To perform operation 20, the printer driver 44 converts the image type data into printing data and outputs the printing data to the spooler 42. Then, the spooler 42 outputs the printing data from the printer driver 40 through the output terminal OUT1.

In order to perform operation 12, the printer driver 44 converts the intermediate data from the spooler 42 into printing data according to characteristics such as a font or colour, before a determination is made as to whether an error has occurred. However, in order to perform operations 18 and 20, the occurrence of an error is recognized according to the control signal received from the control unit 46 and the printer driver 44 converts the intermediate data received from the control unit 46, instead of the spooler 42, into image type data regardless of the characteristic and converts the image type data into printing data.

To perform operation 22, the control unit 46 determines whether the intermediate data has been completely converted into the printing data by the printer driver 44 and outputs the result of the determination as a conversion signal to the printer driver 44. Then, the printer driver 44 converts intermediate data that has not been converted into printing data into printing data in response to the conversion signal received from the control unit 46. For example, when it is determined that all of GDI functions included in an EMF have not been converted into printing data based on the conversion signal received from the control unit 46, the printer driver 44 converts a GDI function or GDI functions, i.e. the intermediate data that has not been converted, into printing data.

The control unit 46 shown in Figure 2 can control intermediate data to be stored in the storage unit 40. In addition, the printing apparatus for recovering an error, shown in Figure 2, can be installed within a host generating a document to be printed.

A computer-readable recording medium for storing a computer program for controlling a printing apparatus to recover an error according to the present invention will now be described.

The computer program stored in the computer-readable recording medium according to the present invention performs the steps of storing intermediate data corresponding to a document to be printed, converting the intermediate data into printing data, determining whether an error has occurred while converting the intermediate data into the printing data and, when it is determined that an error has occurred, converting the intermediate data into image type data and converting the image type data into printing data. When it is determined that an error has not occurred or after the image type data is converted into the printing data, the computer program may further include the steps of determining whether the intermediate data has been completely converted into the printing data and, when it is determined that the intermediate data has not been completely converted into the printing data, converting remaining intermediate data into printing data.

When it is determined that an error has occurred, the computer program, which converts intermediate data into image type data and then converts the image type data into printing data, can load stored intermediate data, convert the loaded intermediate data into image type data and convert the image type data into printing data.

As described above, in the present invention, when an error occurs during the conversion of intermediate data into printing data, the intermediate data is converted into image type data and the image type data is converted into printing data. Accordingly, the present invention automatically recovers the error occurring during data conversion without using an additional printer driver, thereby printing a document normally.

In a computer system running Windows NT or a descendant operating system, an exception during generation of RAW print data from a spooled EMF document is handled by generating DIB (Device Independent Bitmap) data, which may be stored in a file, and then generating RAW print data from the DIB data.

## Claims

1. A method of printing an electronic document, the method comprising:
storing document data in a device independent metafile; and
converting said metafile to device specific print data;
**characterised by**
determining whether said metafile has been successfully converted and, in the event that it has not;
converting said metafile to non device specific image data; and
converting said image data to device specific print data and outputting said print data.

2. A computer programmed to perform a method according to claim 1.

3. A signal representing a computer program for programming a computer to provide a computer according to claim 2.

4. A data carrier having a signal according to claim 3 recorded therein or thereon.

5. A printing apparatus comprising control means (46), storage means (40) and a printer driver (44), the control means (46) being operable to control the printer driver (44) to convert a device independent metafile, read from the storage means (40), into print data, **characterised in that** the control means (46) is configured to determine whether an error has occurred during the conversion and, in the event that it has, to control the printer driver (44) to convert the device independent metafile read from the storage means (40) into image data and subsequently to convert said image data into print data.

6. A printing method for recovering an error, comprising:
storing intermediate data corresponding to a document to be printed;
converting the intermediate data into printing data;
determining whether an error has occurred while the intermediate data is converted into the printing data; and
in response to determining that an error has occurred, converting the intermediate data into image type data and converting the image type data into the printing data,
wherein the document is printed using the printing data.

7. The printing method of claim 6, further comprising:
in response to determining that an error has not occurred or after determining that an error has occurred, and the intermediate data has been converted into image type data and the image type data has been converted into the printing data, determining whether the intermediate data has been completely converted into the printing data; and
in response to determining that the intermediate data has not been completely converted into the printing data, going back to converting the intermediate data into the printing data.

8. The printing method of claim 6, wherein in response to determining that an error has occurred, loading the stored intermediate data;
converting the loaded intermediate data into the image type data; and
converting the image type data into the printing data.

9. The printing method of claim 6, wherein the error is a general protection fault type error.

10. A printing apparatus for recovering an error, comprising:
a storage unit storing intermediate data corresponding to a document to be printed;
a printer driver converting the intermediate data into printing data or, in response to a control signal, converting the intermediate data into image type data and then converting the image type data into the printing data; and
a control unit inspecting whether an error has occurred while the intermediate data is converted into the printing data, outputting a result of the inspection as the control signal, and in response to the control signal, loading the intermediate data from the storage unit and outputting the loaded intermediate data to the printer driver,
wherein the document is printed using the printing data.

11. The printing apparatus of claim 10, wherein the control unit inspects whether the intermediate data has been completely converted into the printing data by the printer driver, and outputs a result of the inspection as a conversion signal to the printer driver, and
the printer driver converts the intermediate data into the printing data in response to the conversion signal.

12. The printing apparatus of claim 10, wherein the control unit comprises:
an error inspector, which inspects whether an error has occurred while the intermediate data is converted into the printing data and outputs a result of the inspection as the control signal; and
a data loader, which in response to the control signal, loads the intermediate data from the storage unit and outputs the loaded intermediate data to the printer driver.

13. The printing apparatus of claim 10, further comprising a spooler loaded with intermediate data from the storage unit and outputting the loaded intermediate data to the printer driver, wherein the printer driver converts the intermediate data received from the spooler into the printing data.

14. A computer-readable recording medium storing a computer program comprising:
storing intermediate data corresponding to a document to be printed; converting the intermediate data into printing data; determining whether an error has occurred while the intermediate data is converted into the printing data; and
in response to determining that an error has occurred, converting the intermediate data into image type data and converting the image type data into the printing data,
wherein the document is printed using the printing data.

15. The computer-readable recording medium of claim 14, wherein the computer program further comprises:
in response to determining that an error has not occurred or after in response to determining that an error has occurred, determining whether the intermediate data has been completely converted into the printing data; and
in response to determining that the intermediate data has not been completely converted into the printing data, going back to converting the intermediate data into the printing data.

16. The computer-readable recording medium of claim 14, wherein:
in response to determining that an error has occurred, loading the stored intermediate data;
converting the loaded intermediate data into the image type data; and
converting the image type data into the printing data.

17. A printing method for recovering an error, comprising:
converting intermediate data into printing data;
determining whether an error has occurred while converting the intermediate data into the printing data;
converting the intermediate data into image type data and converting the image type data into the printing data if determined that an error has occurred;
determining if the intermediate data has been completely converted into the printing data; and
printing the document using the printing data if determined that the intermediate data has been completely converted into the printing data.

18. The printing method according to claim 17, wherein if determined that the intermediate data has not been completely converted into printing data, going back to converting the intermediate data into printing data.

19. The printing method according to claim 17, wherein the error is a general protection fault type error.

20. A printing apparatus for recovering an error, comprising:
a storage unit storing intermediate data corresponding to a document to be printed;
a printer driver converting the intermediate data into printing data; and
a control unit determining whether an error has occurred while the intermediate data is converted into the printing data, and in response to the determination, loading the intermediate data from the storage unit to the printer driver,
wherein the document is printed using the printing data.

21. The printing apparatus of claim 20, wherein the control unit inspects whether the intermediate data has been completely converted into the printing data by the printer driver, and outputs a result of the inspection as a conversion signal to the printer driver, and
the printer driver converts the intermediate data into the printing data in response to the conversion signal.

22. The printing apparatus of claim 20, wherein the control unit comprises:
an error inspector which inspects whether an error has occurred while the intermediate data is converted into the printing data and outputs a result of the inspection as a control signal; and
a data loader which in response to the control signal, loads the intermediate data from the storage unit and outputs the loaded intermediate data to the printer driver.

23. The printing apparatus of claim 20, further comprising a spooler loaded with intermediate data from the storage unit and outputting the loaded intermediate data to the printer driver, wherein the printer driver converts the intermediate data received from the spooler into the printing data.

24. A printing apparatus for recovering an error, comprising:
a storage unit storing intermediate data corresponding to a document to be printed;
a printer driver converting the intermediate data into image type data and then converting the image type data into printing data in response to a control signal; and
a control unit determining whether an error has occurred while the intermediate data is converted into the printing data, outputting a control signal according to the determination, and in response to the control signal, outputting the loaded intermediate data to the printer driver,
wherein the document is printed using the printing data.

25. The printing apparatus of claim 24, wherein the control unit inspects whether the intermediate data has been completely converted into the printing data by the printer driver, and outputs a result of the inspection as a conversion signal to the printer driver, and
the printer driver converts the intermediate data into the printing data in response to the conversion signal.
